# EUROPEAN PATENT SPECIFICATION

(11) **EP 2 629 630 B1**
(45) Date of publication and mention of the grant of the patent: **18.10.2017**
(21) Application number: 11834995.0
(22) Date of filing: 18.10.2011
(51) Int. Cl.: A23P 30/25, A21D 2/02, A21D 13/37, A21D 13/47, A21D 13/80, A23P 30/20

(54) **SOFT-BAKED FOODSTUFFS AND METHODS OF MANUFACTURING THE SAME**
WEICHGEBACKENE LEBENSMITTEL UND HERSTELLUNGSVERFAHREN DAFÜR
PRODUITS ALIMENTAIRES MOELLEUX CUITS AU FOUR ET LEURS PROCÉDÉS DE FABRICATION

(30) Priority: 18.10.2010 US 394277 P; 20.10.2010 US 405037 P
(43) Date of publication of application: 28.08.2013
(73) Proprietor: Intercontinental Great Brands LLC, East Hanover, NJ 07936 (US)
(72) Inventor: COUTTENYE, Richard, Augusto, New York, NY 10038 (US); JANULIS, Theodore, Randolph, NJ 07869 (US)
(74) Representative: Hoffmann Eitle
(86) International application number: PCT/US2011/056721
(87) International publication number: WO 2012/054489

(56) References cited:
- WO-A1-03/011036
- US-A- 4 948 602
- US-A- 5 499 914
- US-A- 5 576 036
- US-A1- 2002 110 631
- US-A1- 2003 044 489
- US-A1- 2004 219 271
- US-A1- 2007 098 865
- US-B1- 6 759 070
- DATABASE GNPD [Online] MINTEL; 1 September 2006 (2006-09-01), Anonymous: "Soft cookies", XP002723623, Database accession no. 583726
- DATABASE GNPD [Online] MINTEL; 1 August 2010 (2010-08-01), Anonymous: "Soft cakes filled with milk", XP002723624, Database accession no. 1380672
- DATABASE GNPD [Online] MINTEL; August 2008 (2008-08), Anonymous: "Gingerbread Stars", XP002723625, Database accession no. 1029069
- DATABASE GNPD [Online] MINTEL; April 2009 (2009-04), Anonymous: "Flower-Shaped Biscuits", XP002723626, Database accession no. 1085079
- DATABASE GNPD [Online] MINTEL; December 2009 (2009-12), Anonymous: "Festive Shapes Pure Butter Shortbread Cookies", XP002723627, Database accession no. 1233444
- DATABASE GNPD [Online] MINTEL; 4 February 2009 (2009-02-04), Anonymous: "Frogs Frosted Sugar Cookies", XP002723628, Database accession no. 1068532
- Duncan Manley: "Biscuit, Cracker and Cookie Recipes for the Food Industry", 2001, Woodhead publishing pages 27-29, * the whole document *
- P. R. Whitely: "Biscuit Manufacture: fundamentals of in-line production", 1971, Applied Science pages 233-235, * the whole document *
- Duncan Manley: "Technology of Biscuits, Crackers and Cookies", 1998, Woodhead publishing page 285.289, 397-411,
- Duncan Manley: "Manley's Technology of Biscuits, Crackers and Cookies", 2001, Woodhead publishing page 275,

## Description

### BACKGROUND OF THE INVENTION

The present invention generally relates to food technology, and more particularly, soft-baked foodstuffs, such as cookies and brownies, and methods of manufacturing the same.

"Soft cookies", obtainable via DATABASE GNPD MINTEL, Database accession no. 583726 discloses soft cookies chocolate chip beer claw shaped cookies, "Soft cakes filled with milk", obtainable via DATABASE GNPD MINTEL, Database accession no. 1380672 discloses bear shaped soft cakes filled with milk, "Flower-Shaped Biscuits", obtainable via DATABASE GNPD MINTEL, Database accession no.1085079 discloses flower-shaped biscuits in chocolate and cranberry varieties. WO 03/011036 A1 disclose a food product including a body which may be formed of one or more edible elements having means for hanging the body on a food vessel.

### BRIEF SUMMARY OF THE INVENTION

Typical soft-baked cookies, brownies or similar baked goods have ingredients and/or are made in such a way that outer contours and edges shaped into the pre-bake dough are substantially morphed or lost during baking. Cooking pans, molds or post bake cutters are often required to create a soft-baked foodstuff with a specific shape. In certain instances, it may be desirable to produce a soft-baked foodstuff without using pans, molds or cutting devices.

According to the invention, there is a baked foodstuff comprising a generally planar bottom surface; a peripheral sidewall forming a bottom peripheral edge with the planar bottom surface; and a top surface forming a top outer peripheral edge with the side-wall, wherein the top surface and the sidewall are unconstrained during baking and the foodstuff is dough-based and has a post-baked moisture content of at least 4%. The top outer peripheral edge post baking has a radius of curvature no greater than 5 mm as measured between the top surface and the peripheral sidewall. The top surface is angled from the sidewall no more than 145°.

In one embodiment, the top surface is angled from the sidewall no more than 130°. In one embodiment, the top surface is angled from the sidewall no more than 120°. In one embodiment, the top surface is angled from the sidewall no more than 110°. In one embodiment, the top surface is angled from the sidewall no more than 100°. In one embodiment, the top surface is angled from the sidewall no more than 90°. According to the invention, at least a portion of the top peripheral edge is substantially vertically aligned with at least a portion of the bottom peripheral edge. Further, a portion of the top peripheral edge is horizontally spaced apart from a portion of the bottom peripheral edge by a distance of less than 5 mm. According to the invention, the baked top surface and the peripheral sidewalls. The top surface is angled from the sidewall no more than about 145°.

In one embodiment, the top surface is angled from the sidewall no more than about 130°. In one embodiment, the top surface is angled from the sidewall no more than about 120°. In one embodiment, the top surface is angled from the sidewall no more than about 110°. In one embodiment, the top surface is angled from the sidewall no more than about 100°. In one embodiment, the top surface is angled from the sidewall no more than about 90°. According to the invention, at least a portion of the top peripheral edge is substantially vertically aligned with at least a portion of the bottom peripheral edge. Further, a portion of the top peripheral foodstuff is derived from a dough having a pre-baked water to flour ratio in the range of 0.1 to 0.15, a sugar to flour ratio in the range of 0.33 to 0.65 and a lipid to flour ratio on a dry weight basis in the range of 0.14 to 0.2. In one embodiment, the baked foodstuff is derived from a dough having a pre-baked water to flour ratio of 0.11, a sugar to flour ratio of 0.47 and a lipid to flour ratio of 0.2. In one embodiment, the baked foodstuff is derived from a dough having a pre-baked water to flour ratio of 0.15, a sugar to flour ratio of 0.64 and a lipid to flour ratio of 0.2. In one embodiment, the baked foodstuff is derived from a dough having a pre-baked water to flour ratio of 0.12, a sugar to flour ratio of 0.4 and a lipid to flour ratio of 0.15.

In one embodiment, the dough-based foodstuff is wheat-based. In one embodiment, the water activity of the baked foodstuff is 0.5 to 0.6. In one embodiment, a maximum distance between the bottom surface and the top surface is no less than 7.5 mm. In one embodiment, a maximum distance between the bottom surface and the top surface is at least 14 mm. In one embodiment, the baked foodstuff is made from a piece of shaped pre-baked dough, the baked foodstuff having a shape substantially similar to a shape of the piece of pre-baked dough. In one embodiment, the baked foodstuff has a size similar to a size of the piece of pre-baked dough. In one embodiment, the moisture content is measured immediately after baking.

In another embodiment there is a dough-based, extruded and wire-cut soft baked good comprising: a substantially planar bottom surface; an upper surface unconstrained during baking; and a substantially vertical outer peripheral surface that forms an angle with the upper surface that is approximately square.

In another embodiment there is a dough-based, extruded and wire-cut soft baked good comprising: a substantially planar bottom surface; an upper surface unconstrained during baking, wherein the upper surface proximate the bottom surface extends from the bottom surface at an angle of no greater than 130.

In another embodiment there is a soft-baked good made from an extruded dough having a post-baking moisture content of at least 4% and having a total vertical projection area after baking that is no greater than approximately 1.5 times the total vertical projection area of the extruded dough prior to baking.

In another embodiment there is a soft-baked good made from an extruded dough having a post-baking moisture content of at least 4% having a total vertical projection area after baking that is no greater than approximately 1.1 times the total vertical projection area of the extruded dough prior to baking.
no greater than approximately 1.1 times the total vertical projection area of the extruded dough prior to baking.

In another embodiment there is a method comprising: combining ingredients including water, flour, sugar and lipid to form a dough, the dough having a pre-bake water to flour ratio of 0.1, a pre-bake sugar to flour ratio of 0.33 and a pre-bake lipid to flour ratio of 0.14. In one embodiment, the method further comprises extruding the dough through a die. In one embodiment, the method further comprises cutting the extruded dough with a wire. In one embodiment, the method further comprises co-extruding the dough with a filler material through a die.

In another embodiment there is a method comprising: combining ingredients including water, flour, sugar and lipid to form a dough, the dough having a pre-bake water to flour ratio of 0.11, a pre-bake sugar to flour ratio of 0.47 and a pre-bake lipid to flour ratio of 0.2.

In another embodiment there is a method comprising: combining ingredients including water, flour, sugar and lipid to form a dough, the dough having a pre-bake water to flour ratio of 0.15, a pre-bake sugar to flour ratio of 0.64 and a pre-bake lipid to flour ratio of 0.2.

In another embodiment there is a method comprising: combining ingredients including water, flour, sugar and lipid to form a dough, the dough having a pre-bake water to flour ratio of 0.12, a pre-bake sugar to flour ratio of 0.4 and a pre-bake lipid to flour ratio of 0.15.

### BRIEF DESCRIPTION OF THE SEVERAL VIEWS OF THE DRAWINGS

The following detailed description of embodiments of soft-baked foodstuffs and methods of manufacturing the same will be better understood when read in conjunction with the appended drawings of exemplary embodiments. It should be understood, however, that the invention is not limited to the precise arrangements and instrumentalities shown.

In the drawings:
Fig. 1A is a top, front, perspective view of a soft-baked foodstuff in accordance with an exemplary embodiment of the present invention;
Fig. 1B is a top plan view of the soft-baked foodstuff shown in Fig. 1A;
Fig. 1C is a bottom plan view of the soft-baked foodstuff shown in Fig. 1A;
Fig. 1D is a front elevational view of the soft-baked foodstuff shown in Fig. 1A;
Fig. 1E is a rear elevational view of the soft-baked foodstuff shown in Fig. 1A;
Fig. 1F is a right, side, elevational view of the soft-baked foodstuff shown in Fig. 1A;
Fig. 1G is a left, side, elevational view of the soft-baked foodstuff shown in Fig. 1A;
Fig. 2A is a top plan view of a soft-baked foodstuff in accordance with an exemplary embodiment of the present invention;
Fig. 2B is a bottom plan view of the soft-baked foodstuff shown in Fig. 2A;
Fig. 2C is a rear top perspective view of the soft-baked foodstuff shown in Fig. 2A;
Fig. 2D is a front top perspective view of the soft-baked foodstuff shown in Fig. 2A;
Fig. 3 is a flow chart of the process used in making the soft-baked foodstuff shown in Fig. 1A;
Fig. 4A is a bottom plan view of a die used to extrude dough for creating the soft-baked foodstuff;
Fig. 4B is a side elevational view of the die shown in Fig. 4A;
Fig. 4C is an enlarged view of the die shown in Fig. 4A; and
Fig. 5 is a top perspective view of a soft-baked foodstuff in accordance with an exemplary embodiment of the present invention.

### DETAILED DESCRIPTION OF THE INVENTION

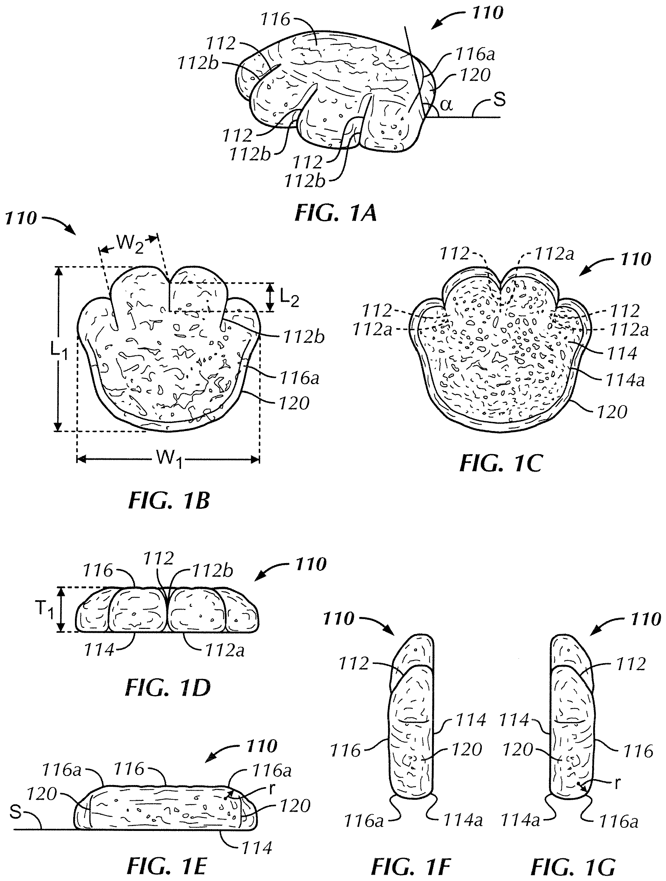

Referring to the drawings in detail, wherein like reference numerals indicate like elements throughout, there is shown in Figs. 1A-1G, 2A-D and 5 soft-baked foodstuffs, generally designated 110, 210, 510 (where appropriate, reference to 110 includes embodiments 210 and 510) in accordance with exemplary embodiments of the present invention. Soft-baked foodstuffs 110 may be any edible substance formed using a dough with the ingredients and/or methods described herein and may include for example, but are not limited to, cookies, biscuits, brownies, and cakes.

The ingredients and/or methods described herein provide a soft-baked foodstuff 110 that when baked, is generally regarded as soft or soft-baked. As described further below, the moisture content and/or the water activity of post-baked foodstuff 110 may be used to characterize whether a post-baked foodstuff is considered to be "soft-baked".

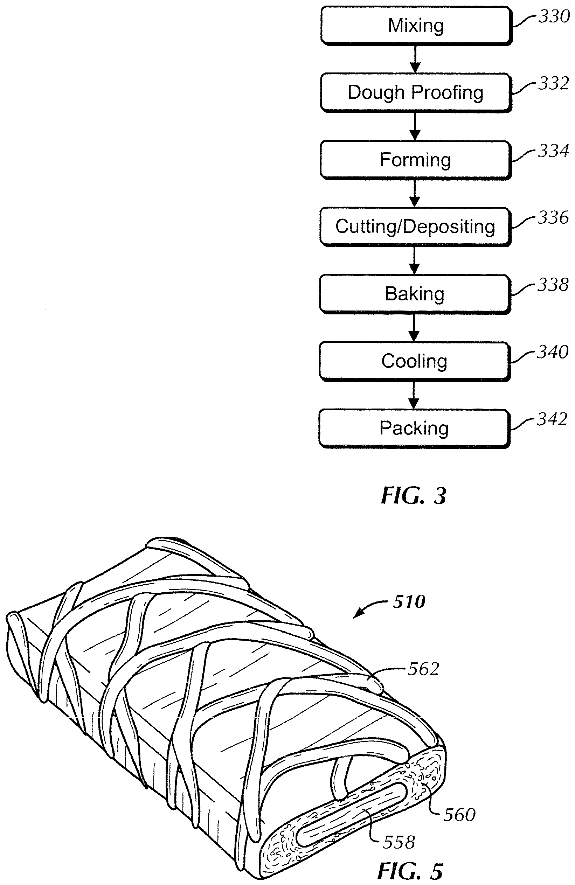

As described in further detail below, the ingredients and/or methods described herein may allow for making of a soft textured baked snack product, or soft-baked foodstuff 110, having clearly defined surface features 112 (e.g. indentations/grooves/channels) and/or outer peripheral shape. Soft-baked foodstuff 110 may substantially retain the pre-baked shape and thickness without the use pans and/or molds during processing and baking. The ingredients and/or methods described herein may also allow for making a soft textured baked snack product, or soft-baked foodstuff 110, having a desired thickness, an upstanding outer periphery and/or a top peripheral edge without constraining the top and side-wall surfaces during baking. For example, a piece of brownie dough formed into a rectangle and placed on an oven band may substantially retain its rectangle shape as the dough is moved through the oven and cooked to form a soft-baked brownie bar (see Fig. 5).

Referring to Figs. 1A-1G, the post-baked foodstuff 110 has a top surface 116, a bottom surface 114 and one or more surface features 112.

The ingredients and/or methods described below may allow for surface feature 112, thickness and/or outer peripheral shape of soft-baked foodstuff 110 (e.g., the shape of the pre-baked dough) to be retained post-baking without the use of a pan (e.g. without constraining the top surface 116 or sidewall 120). In one embodiment, the spreading of the formed dough into the post-baked foodstuff 110 is limited in such a manner that the formed dough retains its shape without the surface features 112 and/or peripheral edges running or spreading into one another in such a degree as to diminish, in one embodiment, or eliminate, in one embodiment, the distinctiveness of surface feature 112 and/or top peripheral edge 116a in the post-baked foodstuff. Typical soft-baked cookies or similar baked goods have ingredients and/or are made in such a way that the surface features similar to the surface features 112 described herein and/or top peripheral edge 116a formed into such a dough pre-baking would be substantially morphed or lost during baking as the dough spreads together during baking. Typical soft-baked goods may also be limited to an undesirably low thickness. In some embodiments, eliminating cooking pans may reduce the expense of investing in, cleaning and maintaining a panning line. In some embodiments, eliminating the pans allows for surface features 112 to appear more pronounced and deep (e.g., extend through the thickness of soft-baked foodstuff 110 from top surface 116 to bottom surface 114). In one embodiment, eliminating the pans allows for expanded use of existing ovens.

Also, the ingredients and/or methods described below may allow for surface feature 112 and thickness and/or outer peripheral shape of soft-baked foodstuff 110 (e.g., the shape of the pre-baked dough) to be retained post-baking without the use of a rotary mold. In some embodiments, a soft/batter-like type dough used to make a soft-baked cookie or similar baked good may stick to the rotary mold. Additionally, the thickness of the baked good may be limited with the use of a rotary mold as the molded dough is more difficult to remove from the mold as the thickness or depth of the mold increases. The thickness of a baked good formed using a rotary mold is often limited to a relatively thin (e.g., a thickness of less than 7.5 mm) and crisp baked good (such as a cookie) depending on the type of dough being used. In some embodiments, eliminating the rotary mold and pans allows the height or thickness of soft-baked foodstuff 110 to be increased or decreased without requiring capital investment (e.g., new rotary die or pans for each time the thickness is adjusted).

Also, the ingredients and/or methods described below may allow for the surface feature 112, thickness and/or outer peripheral shape of soft-baked foodstuff 110 (e.g., the shape of the pre-baked dough) to be retained post-baking without having to cut or further form the soft-baked product post-baking. In one embodiment, cooking a formed dough rather than cutting the soft-baked product eliminates the cutting equipment and operation. In one embodiment, cooking a formed dough rather than cutting the soft-baked product reduces product waste (e.g. trims). In one embodiment, cooking a formed dough rather than cutting the soft-baked product eliminates cutting marks and/or exposure of the internal grain structure.

In one embodiment, soft-baked foodstuff 110 has a post-baked moisture content of at least 4% immediately after baking. The moisture level may also remain substantially unchanged from immediately after baking to after packaging and through distribution and shelf-life of soft-baked foodstuff 110. In one embodiment, soft-baked foodstuff 110 contains no moisture reservoir that is capable of transferring substantial moisture to the dough post-baking. For example, soft-baked foodstuff 110 may be free of discrete humectants, water or moisture reservoirs. Soft-baked foodstuff 110 may be free of a water based confectionary filler layer or a dollop that would transfer moisture to an initially dry post-baked casing (e.g., a casing having an initial post-baked moisture content of less than 4%). In some embodiments, soft-baked foodstuffs 110 described below may contain a partially or fully encased filler layer or dollop that does not alter the water content or fat content of the casing (e.g., during distribution and/or throughout the shelf life). In some embodiments, soft-baked foodstuff 110 includes a filling that is not determinative of whether soft-baked foodstuff 110 is considered to be dry or soft-baked (e.g., the casing would have been soft-baked post-baking even if the filling had been omitted). In some embodiments, soft-baked foodstuff 110 includes a casing that has a moisture content of at least 4% immediately after baking that increases in moisture content for some time after baking. In some embodiments, the increase in moisture content of soft-baked foodstuff 110 may be due to a moisture reservoir within the product.

The surface feature 112, thickness and/or outer peripheral shape of the foodstuff 110 may be retained post-baking by selecting and using a novel combination of ingredients. Typically, the ingredients for a soft-baked good will include flour, sugar, lipid, leavening agent, water, and other ingredients. Any suitable type or combinations of flour commonly used in or developed for soft-baked dough can be used according to the invention. The flour content of the dough used to make soft-baked foodstuff 110, is in one embodiment in the range of 15% to 50%, in another embodiment in the range of 20% to 40%, and in another embodiment in the range of 27% to 37% by weight based on the weight of the dough.

The lipids used in the dough for soft-baked foodstuff 110 may be a solid, semi solid or liquid fat, or combinations thereof at room temperature. The lipids may be of animal or plant origin, such as, for example, butter, butter oil, canola oil, coconut oil, copra oil, corn oil, cotton oil, lard, margarine, olive oil, palm oil, palm kernel oil, peanut oil, safflower oil, soybean oil, sunflower oil, tallow, hydrogenated, partially hydrogenated, non-hydrogenated, unsaturated, and the like, or combinations thereof. The lipids can be emulsified or stabilized with mono- or diglycerides or other emulsifiers known in the art. The total lipid content of the dough according to embodiments of the invention is in one embodiment in the range of 5% to 35%, and in another embodiment in the range of 10% to 25% by weight of added lipid based on the weight of the dough.

In one embodiment, the ingredients used to make tsoft-baked foodstuff 110 includes one or more leavening agents to provide desirable flow properties during baking, resulting in a post-baked product of desired shape. Any conventional leavening agent can be utilized in accordance with the invention, for example, sodium bicarbonate, phosphates (e.g., disodium, dihydrogen, pyrophospate or sodium aluminum phosphate), and the like. Baking powder, which comprises a mixture of at least one bicarbonate or carbonate salt, at least one acidifying agent and at least one separating agent may also be used. In one embodiment, sodium bicarbonate is used with sodium diphosphate or disodium dihydrogen pyrophosphate, and a starch as separating agent. These mixtures may be available commercially with a fixed composition. In one embodiment, sodium bicarbonate can be used alone, in an amount in the range of 0.2% to 0.7% based on the weight of the dough.

In one embodiment, the water to flour ratio of the ingredients used to make soft-baked foodstuff 110 on a dry weight basis is from 0.1 to 0.15, the sugar to flour ratio of the ingredients used to make soft-baked foodstuff 110 on a dry weight basis is from 0.33 to 0.65 and the lipid to flour ratio of the ingredients used to make soft-baked foodstuff 110 on a dry weight basis is from 0.14 to 0.2. In one embodiment, the water to flour ratio of the ingredients used to make soft-baked foodstuff 110 on a dry weight basis is 0.10, the sugar to flour ratio of the ingredients used to make soft-baked foodstuff 110 on a dry weight basis is 0.33 and the lipid to flour ratio of the ingredients used to make soft-baked foodstuff 110 on a dry weight basis is 0.14. In one embodiment, the water to flour ratio of the ingredients used to make soft-baked foodstuff 110 on a dry weight basis is 0.11, the sugar to flour ratio of the ingredients used to make soft-baked foodstuff 110 on a dry weight basis is 0.47 and the lipid to flour ratio of the ingredients used to make soft-baked foodstuff 110 on a dry weight basis is 0.2. In one embodiment, the water to flour ratio of the ingredients used to make soft-baked foodstuff 110 on a dry weight basis is 0.12, the sugar to flour ratio of the ingredients used to make soft-baked foodstuff 110 on a dry weight basis is 0.40 and the lipid to flour ratio of the ingredients used to make soft-baked foodstuff 110 on a dry weight basis is 0.15. In one embodiment, the water to flour ratio of the ingredients used to make soft-baked foodstuff 110 on a dry weight basis is 0.15, the sugar to flour ratio of the ingredients used to make soft-baked foodstuff 110 on a dry weight basis is 0.64 and the lipid to flour ratio of the ingredients used to make soft-baked foodstuff 110 on a dry weight basis is 0.2.

Controlling and/or minimizing the amount of free/unbound water in the mixed ingredients may allow for the surface feature 112, thickness and/or outer peripheral shape of the foodstuff 110 to be retained post-baking. In one embodiment, there is substantially no free water in the pre-baked dough. In one embodiment, free water is only added during a first state of mixing as described below. The dough pre-baking will have a moisture content in one embodiment in the range of 2% to 25%, and in another embodiment in the range of 8% to 22%, and in another embodiment in the range of 10% to 13% by weight based on the weight of the dough.

The dough used to make soft-baked foodstuff 110 may include other optional ingredients, such as one or more of texturing agents, flavoring agents, and inclusions. Suitable texturing agents may include whole egg or egg white, liquid or dried egg powder, or any egg substitute. When present, the texturizing agent may be present in an amount in the range of 0.1 % to 10%, and in another embodiment in an amount in the range of 0.5% to 5% by weight based on the weight of the dough. Examples of flavoring agents include natural and high potency flavoring agents, including cinnamon, cocoa powder, fruit flavor, ginger, nut flavor (for example, peanut butter or peanut flour), vanilla flavor, and the like, and combinations of these.

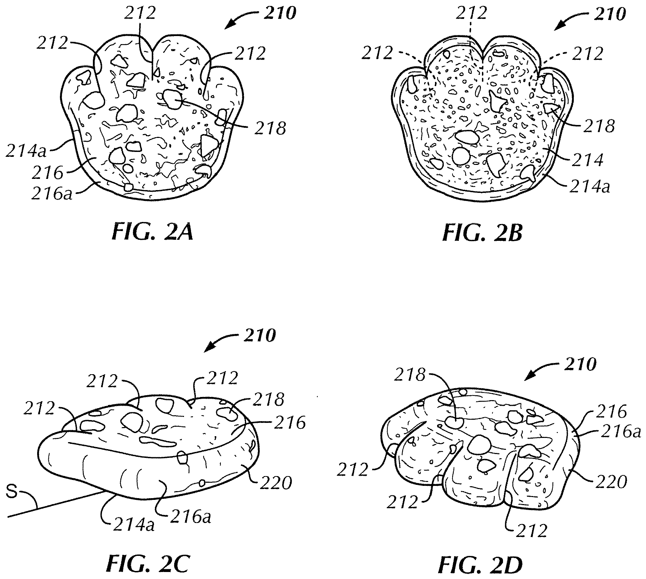

Referring to Figs. 2A-2D, in an exemplary embodiment, soft-baked foodstuff 210 includes inclusions 218. Examples of inclusions include chocolate pieces (shown), caramel, fruit pieces, oat flake pieces, raisins, whole nuts or nut pieces (e.g., walnuts, peanuts and the like), and the like, or mixtures thereof. When present, the inclusions 218 may be of any suitable size, and are in one embodiment in the range of 1 mm to 25 mm, and in another embodiment in the range of 4 mm to 10 mm. The amount of inclusions 110 may be adjusted, as desired. Further, inclusions 218 themselves may be coated, if desired.

Referring to Fig. 5, in an exemplary embodiment, soft-baked foodstuff 510 includes a partially encased filling 558. Filling 558 may include any edible substance such as chocolate, yogurt, creme or fruit paste. In one embodiment, In one embodiment, filling 558 does not alter the water content or fat content of casing 560 (e.g., during distribution and/or throughout the shelf life). In one embodiment, filling 558 is not determinative of whether soft-baked foodstuff 510 is considered to be dry or soft-baked (e.g., casing 560 would have been soft-baked post-baking even if filling 558 had been omitted). In one embodiment, casing 560 has a moisture content of at least 4% immediately after baking that increases in moisture content for some time after baking. In some embodiments, the increase in moisture content of casing 560 is due to the moisture from filling 558.

In one embodiment, soft-baked foodstuff 510 includes a topping 562. In one embodiment, topping 562 is added to soft-baked foodstuff 510 post-baking. In one embodiment, topping 562 is added to soft-baked foodstuff 510 pre-baking. Topping 562 may include any edible substance such as chocolate, crème, yogurt, fruit, fruit paste, icing, chips or sprinkles. In one embodiment, topping 562 is the same substance as is used for filling 558.

Soft-baked foodstuff 110 may have any desired overall flavor characteristic, such as, but not limited to, sugar, peanut butter, chocolate chip, fudge, chocolate, oatmeal, gingerbread, a particular cereal, shortbread, nut (such as almond or macadamia nut), and combinations thereof.

Referring to Fig. 3, in one embodiment, the ingredients for soft-baked foodstuff 110 are combined in step 330. In one embodiment, the ingredients are separated into groups and mixed in different stages. In one embodiment, there are three different groups of ingredients that are mixed in a corresponding stage. In one embodiment, a first group includes mostly dry powdered ingredients, water and lipids. In one embodiment, a second group includes polar/water based liquid ingredients and syrups. In one embodiment, a third group includes flour. In one embodiment, the flour in the first group and the flour in the third group are a similar type of flour. In another embodiment, the flour in the first group and the flour in the third group are different types of flour.

In some embodiments, the ingredients in the first group include one or more of sugar (e.g., natural and/or artificial sweeteners or polyols), soy, non-hydrogenated shortening, apple filling, flour, salt, sodium bicarbonate, water, corn syrup, crystalline fructose and calcium carbonate. In some embodiments, some water and water based syrups and paste are included in the first group to form a stable emulsion with the lipids. In one embodiment, all the free water (e.g., unbound water) for the dough is added in the first group. In one embodiment, the second group includes one or more of glycerin, liquid fructose syrup, corn syrup and apple puree. In one embodiment, the third group includes wheat flour.

In one embodiment, ingredients are mixed together in one or more stages. The ingredients from the first group may be mixed for 3 minutes to 5 minutes in a container at high mixing speed of 1 s⁻¹ (60 rpm) to 1.33 s⁻¹ (80 rpm). The ingredients of the second group may be mixed, for example, with the mixture of the first group for 1 minute to 3 minutes at low mixing speed of 0.33 s⁻¹ (20 rpm) to 0.5 s⁻¹ (30 rpm). In one embodiment, the flour is mixed with the mixture from the first and second groups for 2 minutes to 5 minutes at low mixing speed of 0.33 s⁻¹ (20 rpm) to 0.5 s⁻¹ (30 rpm).

Additional ingredients, such as flavorants and/or inclusions and the like may be added to appropriate portions as desired.

In one embodiment, after the ingredients are mixed together, the dough is set to rest or proofing in step 332. In one embodiment, the dough is set to rest for 30 minutes at room temperature.

Once the dough has rested, the dough may be formed into a desired shape in step 234. The forming system may be located at the front of the oven over the oven band or surface S. For example, in one embodiment, the dough is transferred to a feeding hopper. Such a hopper may be located above two cylindrical gears positioned horizontally and spaced apart. As the gears rotate in opposite directions, the dough is forced through a forming die 450, for example, giving the desired initial shape to the dough rope.

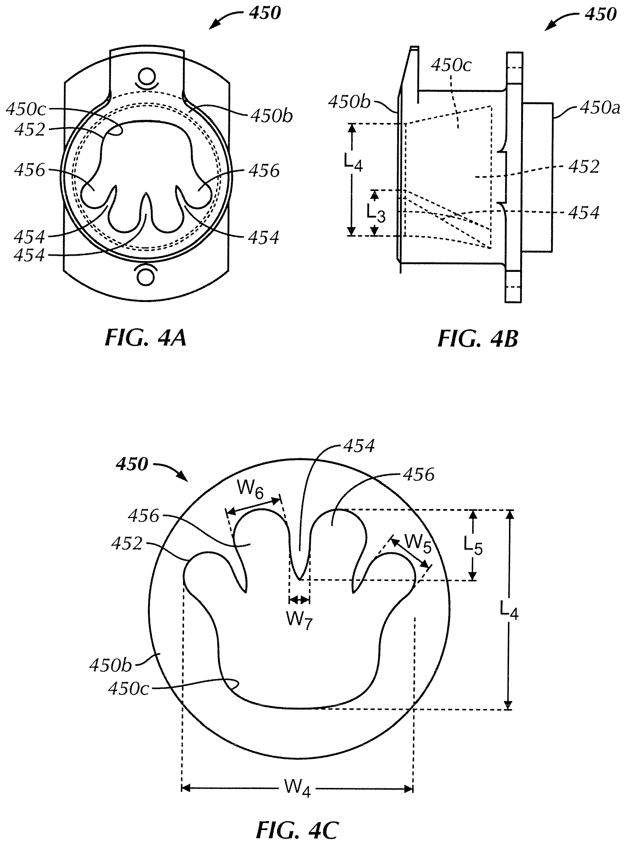

Referring to Figs. 4A-4C, die 450 has a predetermined shape 452 to shape the pre-baked dough such that the post-baked soft-baked foodstuff 110 achieves a desired structure, shape and/or ornamental design. In one embodiment, soft-baked foodstuff 110 includes a shape 452 that is configured to resemble an animal paw. Shape 452 however may be any shape such as but not limited to shapes resembling flora, fauna, geometric shapes (e.g., bar or rectangular shape), cartoon characters, holiday symbols, sporting equipment, sport team logos and mascots and other food products (e.g., pumpkins, hamburgers). Die 450 may be shaped and dimensioned to factor in any expansion and spreading the may occur during baking soft-baked foodstuff 110. In one embodiment, surface features 112 are formed by an inwardly extending projection 454. Projections 454 may, for example, increase in length from a top 450a of die 450 to a bottom 450b of the die 450. Projections 454 may have a maximum length L₅ of 90% of L₄ length. In one embodiment, die 450 has a maximum length L₄ generally aligned with the projection 454 of 46.29 mm. In one embodiment, the projections have a maximum width W₇ of 50% of W₄. In one embodiment, the shape has a maximum width W₄ of 51.56 mm. In one embodiment, space 456 on either side of the projection 454 is at least 11.3 mm. In one embodiment, projections 454 are spaced apart by at least 12.7 mm.

As the dough is forced through die 450, dough pieces or sections having an outer perimeter with the shape of die 450 are prepared by cutting the extruded rope exiting die 450 in step 336. In one embodiment, a wire is used to cut the extruded dough as it exits bottom 450b of die 450. In one embodiment, appropriately formulated dough is fed from a hopper downwardly through one or more nozzles having die 450 located above a conveyor or band having a surface S. As the dough leaves die 450 in the form of a dough cylinder with inwardly extending indentations or edges, a cutting wire is passed through the dough so that discrete pieces of dough are separated from the dough cylinder and fall or are placed onto the conveyor. Wire cut methods may provide a highspeed method for shaping the pre-baked dough in shape 452. Cutting the extruded dough may result in pre-baked good with a sidewall that is substantially vertical and a top that is substantially horizontal coming to a substantially pointed top peripheral edge. In one embodiment, thickness T₁ of the shaped dough piece is thinner proximate protrusions 454 due to the friction between the dough and inner sidewall 450c of die 450. For example, the amount of dough in the palm of shape 452 may be greater than the amount of dough between projections 454. In such an example, once the cut dough hits surface S of the band, upper surface 116 will be slightly raised in the palm area and slightly thinned proximate the fingers. The shaped dough may alternatively have a substantially constant thickness T₁ throughout the entire cross section (e.g., a rectangular bar shape).

Soft-baked foodstuff 110 may contain a partially or fully encased filler layer or dollop. In one embodiment, the filler layer is co-extruded with the shaped dough. For example, a brownie dough bar may be co-extruded with a liquid chocolate or cream center (see Fig. 5). In one embodiment, the moisture and/or water activity of soft-baked foodstuff 110 is measured prior to any substantial change in moisture and/or water content caused by the filling material and/or environmental conditions. In one embodiment, the moisture and/or water activity is measured immediately after baking. In one embodiment, the moisture and/or water activity is measured prior to packaging. In one embodiment, the moisture and/or water activity is measured prior to consumption.

Though the dough described herein is particularly useful in combination with wire cut baked products, other dough-based baked goods can be produced from the disclosed dough including those products produces from panning, rotary molding and other methods and techniques.

In one embodiment, the formed dough may be baked using a commercial oven at step 338. In one embodiment, soft-baked foodstuffs 110 are baked in a direct gas fired (DGF) oven equipped with a solid band. In one embodiment, the oven has a plurality of zones. In one embodiment, the oven has 5 heating zones and baking time is 5 minutes to 15 minutes. In one embodiment, the baking time is 8 minutes. The bake time and oven temperature may be adjusted to get a desired product moisture percent in the post-baked soft-baked foodstuff 110. In one embodiment, the bake time varies or is determined based upon a predetermined desired internal temperature of the baked good. For example, in one embodiment, baking is continued until the internal temperature of the dough reaches 190°F. In one embodiment, soft-baked foodstuff 110 has a final moisture content of 11 % to 12% and water activity of 0.5 to 0.75.

Rather than immediately cooking, the shaped dough may, in some embodiments, be refrigerated or frozen and packaged for shipping to the consumer. In some embodiments, the dough products are provided as "freezer-to-oven" dough products, where the consumer does not have to thaw the dough products before placing the dough products into the oven. In such embodiments, the consumer simply removes the dough pieces from the freezer and places the dough pieces directly into the oven.

Following cooking, the post-baked soft-baked foodstuff 110 is cooled in step 340. In one embodiment, a cooling tunnel is provided at the back of the oven to reduce the internal temperature of soft-baked foodstuff 110 to 15.56 °C (60°F) to 32.22°C (90°F) to stop the cooking process. In one embodiment, soft-baked foodstuff 110 is cooled to an internal temperature of 26.67°C (80°F).

In one embodiment, the cooked and cooled soft-baked foodstuff 110 is packaged in step 342. In one embodiment, soft-baked foodstuff 110 is packaged once soft-baked foodstuff 110 is at room temperature. In one embodiment, soft-baked foodstuff 110 is individually packed using metalized film (e.g., a film having a high moisture/light barrier).

The softness of soft-baked foodstuff 110 may be characterized, for example, by the moisture content of the post-baked soft-baked foodstuff 110. As determined in a post-baked product within the shelf-life of the product, one exemplary soft-baked foodstuff 110 has a moisture content of at least 4% post-baking. In one embodiment, soft-baked foodstuff 110 has a moisture content of at least 4.5% post-baking. In one embodiment, soft-baked foodstuff 110 may have a moisture content of 5% post-baking. In one embodiment, soft-baked foodstuff 110 may have a moisture content of 6% post-baking. In one embodiment, soft-baked foodstuff 110 may have a moisture content of 7% post-baking. In one embodiment, soft-baked foodstuff 110 may have a moisture content of 8% post-baking. In one embodiment, soft-baked foodstuff 110 may have a moisture content of at least 9% post-baking. In one embodiment, soft-baked foodstuff 110 may have a moisture content of 10% post-baking. In one embodiment, soft-baked foodstuff 110 may have a moisture content of 11% post-baking. In one embodiment, soft-baked foodstuff 110 may have a moisture content of 12% post-baking. In one embodiment, soft-baked foodstuff 110 may have a moisture content of 13% post-baking. In one embodiment, soft-baked foodstuff 110 may have a moisture content of 14% post-baking. In one embodiment, soft-baked foodstuff 110 has a moisture content of 4% to 14%. In one embodiment, soft-baked foodstuff 110 has a moisture content of 4% to 8%. In one embodiment, soft-baked foodstuff 110 has a moisture content of 4%

The water activity of the post-baked soft-baked foodstuff 110 may also be indicative of the softness of the baked good. In one embodiment, soft-baked foodstuff 110 has water activity of 0.5 to 0.6. In one embodiment, soft-baked foodstuff 110 has a water activity of no greater than 0.75. In one embodiment, soft-baked foodstuff 110 has a water activity of no less than 0.5. In one embodiment, soft-baked foodstuff 110 has water activity of 0.5 to 0.75. In one embodiment, soft-baked foodstuff 110 has water activity of 0.5. In one embodiment, soft-baked foodstuff 110 has water activity of 0.6. In one embodiment, soft-baked foodstuff 110 has water activity of 0.7.

Referring to Figs. 1A-1G, an exemplary soft-baked foodstuff 110 is shown prior to packaging. In one exemplary embodiment, soft-baked foodstuff 110 has a generally planar bottom surface 114. The generally planar bottom surface may be formed for example, by a surface S of the cooking surface (e.g. the band surface that transports the dough through the oven). In one embodiment, the top surface 116 and sidewall 120 are unconstrained during baking. In one embodiment, soft-baked foodstuff 110 is only constrained by a single planar surface (e.g., surface S) during baking.

The top surface 116 may expand or shift during baking. In one embodiment, the top surface 116 is substantially convex. In one embodiment, the top surface 116 is substantially planar. In one embodiment, the top surface of the formed dough is substantially parallel to the surface S prior to baking and any convexity and/or periphery curvature of the final soft-baked foodstuff 110 is formed by the expansion and/or spreading of the top surface 116 and/or the sidewall 120. In one embodiment, a width W₁ of soft-baked foodstuff 110 is 68 mm. In one embodiment, a length L₁ of soft-baked foodstuff 110 is 58 mm. In one embodiment, the length L₂ of a surface feature 112 is 9 mm. In one embodiment, a width W₂ between surface features 112 is 19 mm.

In one embodiment, the spreading of soft-baked foodstuff 110 during baking is minimized. In one embodiment, the shape of soft-baked foodstuff 110 post-baking is substantially similar to the shape of the dough pre-baking. For example, the top surface 116 may retain, substantially retain, or appear to retain any edges (e.g., a surface feature 112 and/or top peripheral edge 116a) formed during forming or depositing of the dough on the cooking surface S. For example, in one embodiment, the top surface 116 of soft-baked foodstuff 110 substantially retains the top peripheral edge 116a that was present when the dough was deposited on the cooking surface S. In one embodiment, a surface area of a bottom surface of the shaped pre-baked dough is limited to an increase of 10% to 50% to the final surface area of the bottom surface 114 of soft-baked foodstuff 110.

In a preferred embodiment, top peripheral edge 116a of soft-baked foodstuff 110 includes a sharp radius edge such as illustrated in Figs. 1E and 1G. In one embodiment, the radius r (see Figs. 1E and 1G) of top outer peripheral edge 116a of soft-baked foodstuff 110 is substantially the same as the corresponding edge of the shaped pre-baked dough. Top outer peripheral edge 116a post baking may have a radius of curvature r no greater than 2 mm. In one embodiment, top outer peripheral edge 116a post baking has a radius of curvature r of less than 2.5 mm. In one embodiment, top outer peripheral edge 116a post baking has a radius of curvature r of less than 3 mm. In one embodiment, top outer peripheral edge 116a post baking has a radius of curvature r of less than 4 mm. In one embodiment, top outer peripheral edge 116a post baking has a radius of curvature r of less than 5 mm. In one embodiment, top outer peripheral edge 116a post baking may have a radius of curvature r of less than 6 mm. In one embodiment, top outer peripheral edge 116a post baking has a radius of curvature r of less than 7 mm. In one embodiment, top outer peripheral edge 116a post baking may have a radius of curvature r of less than 8 mm. In one embodiment, top outer peripheral edge 116a post baking may have a radius of curvature r of less than 9 mm. In one embodiment, top outer peripheral edge 116a post baking may have a radius of curvature r of less than 10 mm.

In one embodiment, top peripheral edge 116a formed on the top surface 116 pre-baking relaxes (e.g., shifts inwardly and/or downwardly with reference to the bottom peripheral edge 114a) during cooking no more than 30 degrees from vertical. In one embodiment, top peripheral edge 116a formed on top surface 116 pre-baking relaxes during cooking no more than 25 degrees from vertical. In one embodiment, top peripheral edge 116a formed on top surface 116 pre-baking relaxes during cooking no more than 20 degrees from vertical. In one embodiment, top peripheral edge 116a formed on the top surface 116 pre-baking relaxes during cooking no more than 15 degrees from vertical. In one embodiment, top peripheral edge 116a formed on top surface 116 pre-baking relaxes during cooking no more than 10 degrees from vertical. The angles above may also be measured from the baking surface S to give an angle α (illustrated, for example, in Fig. 1A). In one embodiment, angle α is no greater than 120° for a soft-baked foodstuff 110 having a thickness T₁ (illustrated in Fig. 1D) of 14 mm. In one embodiment, angle α is no greater than 120° for a soft-baked foodstuff 110 having a thickness T₁ (illustrated in Fig. 1D) of 7.5 mm or greater. In one embodiment, at least a portion of the post-baked periphery retains a vertically pre-baked outer wall 120. In one embodiment, at least a portion of top peripheral edge 116a is substantially vertically aligned with at least a portion of bottom peripheral edge 114a. In one embodiment, a substantially amount of the post-baked periphery retains the vertically pre-baked shape outer wall 120.

The degree of spreading may also be measured by the amount a sidewall surface 120 angles outwardly toward bottom surface 114 post baking assuming a known pre-baking angle relationship. If the dough is extruded, then the pre-baking angle, in one embodiment, may be 90°. In one embodiment, top surface 116 of the post-baked soft-baked foodstuff 110 may be angled from sidewall 120 no more than 145°. In one embodiment, top surface 116 may be angled from sidewall 120 no more than 130°. In one embodiment, top surface 116 may be angled from sidewall 120 no more than 120°. In one embodiment, top surface 116 may be angled from sidewall 120 no more than 110°. In one embodiment, top surface 116 may be angled from sidewall 120 no more than 100°. In one embodiment, top surface 116 may be angled from sidewall 120 no more than 90°.

The degree of spreading of soft-baked foodstuff 110 may also be measured by the amount the pre-baked top and bottom peripheral edges 116a and 114a move relative to one another during baking or the distance the top and bottom peripheral edges 116a and 114a are spaced horizontally apart particularly where they are vertically aligned just before baking. In one embodiment, the bottom peripheral edge 114a moves or is spaced no more than 1 mm horizontally relative to the top peripheral edge 116a. In one embodiment, the bottom peripheral edge 114a moves or is spaced no more than 2 mm horizontally relative to the top peripheral edge 116a. In one embodiment, the bottom peripheral edge 114a moves or is spaced no more than 3 mm horizontally relative to the top peripheral edge 116a. In one embodiment, the bottom peripheral edge 114a moves or is spaced no more than 4 mm horizontally relative to the top peripheral edge 116a. In one embodiment, the bottom peripheral edge 114a moves or is spaced no more than 5 mm horizontally relative to the top peripheral edge 116a.

In one embodiment, the surface feature 112 is formed at least in part by two sidewalls that extend vertically from the top surface 116 to the bottom surface 114. In one embodiment, the sidewalls may be generally parallel. The two sidewalls may also be joined together during baking forming a plane of weakness that is visible on and perpendicular to the bottom surface 114 post-baking. The plane of weakness may be a wall within soft-baked foodstuff 110 that breaks apart one either side of the wall easier than a wall of similar thickness in a section of soft-baked foodstuff 110 not aligned with the surface feature 112. In one embodiment, the surface feature 112 includes a substantially vertical surface that forms an angle with the top surface 116 that is approximately square. In one embodiment, the surface feature 112 does not extend entirely through soft-baked foodstuff 110 but the bottom surface 116 has surface features 112a that are substantially aligned with respective surface features 112b on the top surface 116 (see Figs. 1A and 1B). In one embodiment, the surface feature 112 is defined at least in part by substantially vertical intersecting faces.

The ingredients and/or method described herein may allow for a thickness T₁ (see Fig. 1D) of soft-baked foodstuff 110 to be larger than typical soft-baked goods (such as soft-baked cookies) due to the reduced spreading and/or expansion. In one embodiment, the thickness T₁ of soft-baked foodstuff 110 is consistent through the entire soft-baked foodstuff except at a surface feature 112 or at the peripheral edge. In one embodiment, the thickness T₁ varies no more than 2.5% across soft-baked foodstuff 110. In one embodiment, the minimum thickness (e.g., the thickness through a surface feature 112) is no more than 40% less than the thickness T₁ of the remainder of soft-baked foodstuff 110. In one embodiment, the thickness T₁ of soft-baked foodstuff 110 is no less than 7.5 mm. In one embodiment, the thickness T₁ of soft-baked foodstuff 110 is 8 mm. In one embodiment, the thickness T₁ of soft-baked foodstuff 110 is 9 mm. In one embodiment, the thickness T₁ of soft-baked foodstuff 110 is 10 mm. In one embodiment, the thickness T₁ of soft-baked foodstuff 110 is 11 mm. In one embodiment, the thickness T₁ of soft-baked foodstuff 110 is 12 mm. In one embodiment, the thickness T₁ of soft-baked foodstuff 110 is 13 mm. In one embodiment, the thickness of soft-baked foodstuff 110 is 14 mm. In one embodiment, the thickness of soft-baked foodstuff 110 is 15 mm. In one embodiment, the thickness of soft-baked foodstuff 110 is 16 mm. In one embodiment, the thickness of soft-baked foodstuff 110 is 17 mm.

In some embodiments, the change in dimensions of soft-baked foodstuff 110 from pre to post bake may be indicative of the amount of spreading. In one embodiment, soft-baked food stuff 110 has a thickness T₁ that remains substantially similar to the thickness of the formed dough just prior to baking. In one embodiment, the post-bake thickness T₁ may be 99% of the pre-bake thickness. In one embodiment, the post-bake thickness T₁ may be 98% of the pre-bake thickness. In one embodiment, the post-bake thickness T₁ may be 97% of the pre-bake thickness. In one embodiment, the post-bake thickness T₁ may be 96% of the pre-bake thickness. In one embodiment, the post-bake thickness T₁ may be 95% of the pre-bake thickness. In one embodiment, the post-bake thickness T₁ may be 94% of the pre-bake thickness. In one embodiment, the post-bake thickness T₁ may be 93% of the pre-bake thickness. In one embodiment, the post-bake thickness T₁ may be 92% of the pre-bake thickness. In one embodiment, the post-bake thickness T₁ may be 91 % of the pre-bake thickness. In one embodiment, the post-bake thickness T₁ may be 90% of the pre-bake thickness. In one embodiment, the post-bake thickness T₁ may be 89% of the pre-bake thickness. In one embodiment, the post-bake thickness T₁ may be 88% of the pre-bake thickness. In one embodiment, the post-bake thickness T₁ may be 87% of the pre-bake thickness. In one embodiment, the post-bake thickness T₁ may be 86% of the pre-bake thickness. In one embodiment, the post-bake thickness T₁ may be 85% of the pre-bake thickness. In one embodiment, the post-bake thickness T₁ may be 84% of the pre-bake thickness. In one embodiment, the post-bake thickness T₁ may be 83% of the pre-bake thickness. In one embodiment, the post-bake thickness T₁ may be 82% of the pre-bake thickness. In one embodiment, the post-bake thickness T₁ may be 81 % of the pre-bake thickness. In one embodiment, the post-bake thickness T₁ may be 80% of the pre-bake thickness.

In one embodiment, soft-baked foodstuff 110 may have a surface area after baking that is 34% greater to 45% greater than the surface area of the foodstuff pre-baking. In one embodiment such increase in surface area may be 35%, 36%, 37%, 38%, 39%, 40%, 41%, 42%, 43%, 44% or 45%.

In one embodiment, soft-baked foodstuff 110 may have a vertical projection area (that is, the cross sectional area defined by a projection of the perimeter of the foodstuff onto a horizontal plane - such as the area illustrated in Fig. 1B) after baking that is 40% greater than the vertical projection area of the foodstuff pre-baking. In one embodiment such increase in vertical projection area surface area may be 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49% or 50%.

In one embodiment, there is a soft-baked foodstuff having one or more of the characteristics of water content, water activity, water/flour ratio, sugar/flour ratio, lipid/flour ratio, control of surface area increase, control of vertical projection area increase, thickness and surface feature definition described herein. In one embodiment, such a soft-baked foodstuff 110 has a structure described and/or illustrated herein without the use of panning or rotary molding.

The invention will further be described by reference to the following non-limiting examples.

Example 1: Soft texture foodstuff with low proximity of surface features and highly define/sharp surface edges.

**Table 1:**

| | | | **PERCENT** | **1 CWT** | |
|---|---|---|---|---|---|
| | **POUNDS** | **OUNCES** | **OF DOUGH** | **POUNDS** | **OUNCES** |
| **GROUP 1** | | | | | |
| Granulated Sugar | 21 | 15.9 | 6.223% | 15 | 11.34 |
| Soy Lecithin | 0 | 5.7 | 0.102% | 0 | 4.10 |
| Non-Hydrogenated Shortening | 27 | 5.8 | 7.743% | 19 | 8.71 |
| Raisin Paste 0.09" (3/32") | 23 | 14.5 | 6.764% | 17 | 1.19 |
| Graham Flour | 11 | 10.7 | 3.303% | 8 | 5.38 |
| Doug Salt | 0 | 15.3 | 0.271% | 0 | 10.93 |
| Sodium Bicarbonate pwd TCP | 1 | 4.9 | 0.369% | 0 | 14.90 |
| Water | 1 | 3.1 | 0.338% | 0 | 13.66 |
| Corn Syrup | 5 | 15.6 | 1.692% | 4 | 4.32 |
| FRUCTOSE, CRYSTALLINE | 4 | 12.5 | 1.353% | 3 | 6.65 |
| Iron Reduced, Powder | 0 | 0.2 | 0.004% | 0 | 0.14 |
| Zinc Oxide, Powder | 0 | 0.3 | 0.005% | 0 | 0.19 |
| Limestone ground Calcium Carbonate | 2 | 13.7 | 0.809% | 2 | 0.67 |
| | | | | | |

| **GROUP 2** | | | | | |
|---|---|---|---|---|---|
| Glycerine | 16 | 11.9 | 4.739% | 11 | 15.39 |
| Quick Cooking Rolled Oats | 20 | 15.6 | 5.935% | 14 | 15.72 |
| Liquid Fructose Syrup | 15 | 9.8 | 4.418% | 11 | 2.43 |
| Corn Syrup | 19 | 14.6 | 5.635% | 14 | 3.57 |
| Water | 17 | 15.0 | 5.076% | 12 | 13.01 |
| | | | | | |

| **GROUP 3** | | | | | |
|---|---|---|---|---|---|
| | | | **PERCENT** | **1 CWT** | |
| | **POUNDS** | **OUNCES** | **OF DOUGH** | **POUNDS** | **OUNCES** |
| Quick Cooking Rolled Oats | 31 | 7.8 | 8.909% | 22 | 7.82 |
| Climax Flour | 128 | 5.3 | 36.314% | 91 | 10.62 |
| | | | | | |

| **GROUP 4** | | | | | |
|---|---|---|---|---|---|
| | 0 | 0.0 | 0.000% | | |
| | 0 | 0.0 | 0.000% | | |
| | 0 | 0.0 | 0.000% | | |
| | 0 | 0.0 | 0.000% | | |
| | 0 | 0.0 | 0.000% | | |
| **TOTALS:** | 353.39 | | 100.000% | 252.42 | |

| | | | | | |
|---|---|---|---|---|---|
| Water/Flour ratio= 0.10 Sugar/Flour ratio = 0.33 Lipid/Flour ratio = 0.14 | | | | | |

Example 2: Soft texture foodstuff with medium proximity of surface features and well defined surface edges. In one embodiment, the baked good produced from the dough of example 2 has the size and appearance similar to soft-baked foodstuff 110 shown in Figs. 1A-1G.

**Table 2:**

| | | | **PERCENT** | **1 CWT** | |
|---|---|---|---|---|---|
| | **POUNDS** | **OUNCES** | **OF DOUGH** | **POUNDS** | **OUNCES** |
| **GROUP 1** | | | | | |
| NBI Granulated Sugar | 25 | 2.1 | 7.308% | 15 | 11.34 |
| Soy Lecithin | 0 | 6.6 | 0.119% | 0 | 4.10 |
| Non -Hydrogenated Shortening | 31 | 4.3 | 9.093% | 19 | 8.71 |
| Apple filling | 27 | 5.1 | 7.944% | 17 | 1.19 |
| Graham Flour | 40 | 8.6 | 11.787% | 25 | 5.38 |
| Dough Salt | 1 | 1.5 | 0.318% | 0 | 10.93 |
| Sodium Bicarbonate pwd TCP | 1 | 7.8 | 0.433% | 0 | 14.90 |
| Water | 1 | 5.9 | 0.397% | 0 | 13.66 |
| Corn Syrup | 6 | 13.3 | 1.987% | 4 | 4.32 |
| FRUCTOSE, CRYSTALLINE | 5 | 7.4 | 1.589% | 3 | 6.65 |
| Iron Reduced, Powder | 0 | 0.2 | 0.004% | 0 | 0.14 |
| Zinc Oxide, Powder | 0 | 0.3 | 0.006% | 0 | 0.19 |
| Limestone Ground Calcium Carbonate | 3 | 4.3 | 0.950% | 2 | 0.67 |
| | | | | | |

| **GROUP 2** | | | | | |
|---|---|---|---|---|---|
| Glycerine | 19 | 2.2 | 5.565% | 11 | 15.39 |
| Liquid Fructose Syrup | 17 | 13.5 | 5.188% | 11 | 2.43 |
| Corn Syrup | 22 | 12.1 | 6.617% | 14 | 3.57 |
| Apple puree | 20 | 8.0 | 5.961% | 12 | 13.01 |
| | | | | | |
| | | | | | |

| **GROUP 3** | | | | | |
|---|---|---|---|---|---|
| Climax Flour | 119 | 7.4 | 34.735% | 74 | 10.62 |

| | | | **PERCENT** | **1 CWT** | |
|---|---|---|---|---|---|
| | **POUNDS** | **OUNCES** | **OF DOUGH** | **POUNDS** | **OUNCES** |
| **GROUP 4** | | | | | |
| | 0 | 0.0 | 0.000% | | |
| | 0 | 0.0 | 0.000% | | |
| | 0 | 0.0 | 0.000% | | |
| | 0 | 0.0 | 0.000% | | |
| | 0 | 0.0 | 0.000% | | |
| **TOTALS:** | 343.92 | | 100.000% | 214.95 | |

| | | | | | |
|---|---|---|---|---|---|
| Water/Flour ratio = 0.11 Sugar/Flour ratio = 0.47 Lipid/Flour ratio = 0.2 | | | | | |

Example 3: Soft texture foodstuff with high proximity of surface features and less defined surface edges.

**Table 3:**

| | | | **PERCENT** | **1 CWT** | |
|---|---|---|---|---|---|
| | **POUNDS** | **OUNCES** | **OF DOUGH** | **POUNDS** | **OUNCES** |
| **GROUP 1** | | | | | |
| Granulated Sugar | 25 | 2.1 | 7.238% | 15 | 11.34 |
| Soy Lecithin | 0 | 6.6 | 0.118% | 0 | 4.10 |
| Non-Hydrogenated Shortening | 31 | 4.3 | 9.006% | 19 | 8.71 |
| Graham Flour | 40 | 8.6 | 11.674% | 25 | 5.38 |
| Dough Salt | 1 | 1.5 | 0.315% | 0 | 10.93 |
| Sodium Bicarbonate pwd TCP | 1 | 7.8 | 0.429% | 0 | 14.90 |
| Water | 4 | 1.6 | 1.180% | 2 | 8.97 |
| Corn Syrup | 20 | 7.8 | 5.900% | 12 | 12.88 |
| FRUCTOSE, CRYSTALLINE | 16 | 6.2 | 4.720% | 10 | 3.89 |
| Iron Reduced, Powder | 0 | 0.2 | 0.004% | 0 | 0.14 |
| Zinc Oxide, Powder | 0 | 0.3 | 0.006% | 0 | 0.19 |
| Limestone GroundCalcium Carbonate | 3 | 4.3 | 0.941% | 2 | 0.67 |
| | | | | | |

| **GROUP 2** | | | | | |
|---|---|---|---|---|---|
| Glycerine | 19 | 2.2 | 5.512% | 11 | 15.39 |
| Liquid Fructose Syrup | 17 | 13.5 | 5.138% | 11 | 2.43 |
| Corn Syrup | 22 | 12.1 | 6.554% | 14 | 3.57 |
| Cinnamon | 0 | 8.3 | 0.150% | 0 | 5.21 |
| Apple powder (75% apple solids) | 1 | 4.5 | 0.369% | 0 | 12.80 |
| Nat Apple Flavor 348789 | 0 | 9.600 | 0.173% | 0 | 6.00 |
| Nat Apple Flavor 861347 | 1 | 3.200 | 0.346% | 0 | 12.00 |
| Water | 20 | 3.6 | 5.824% | 12 | 10.24 |
| | | | | | |

| **GROUP 3** | | | | | |
|---|---|---|---|---|---|
| Climax Flour | 119 | 7.4 | 34.404 % | 74 | 10.62 |
| | | | | | |

| **GROUP 4** | | | | | |
|---|---|---|---|---|---|
| | 0 | 0.0 | 0.000% | | |
| | 0 | 0.0 | 0.000% | | |
| | 0 | 0.0 | 0.000% | | |
| | 0 | 0.0 | 0.000% | | |
| | 0 | 0.0 | 0.000% | | |
| **TOTALS:** | 347.24 | | 100.000% | 217.02 | |

| | | | | | |
|---|---|---|---|---|---|
| Water/Flour ratio = 0.15 Sugar/Flour ratio = 0.64 Lipid/Flour ratio = 0.2 Mixing: Single arm (peerless) mixer. Mixing procedure: The ingredients are separated in three groups and mixed in 3 stages. | | | | | |

Group 1 - includes mostly dry powdered ingredients and lipids. Also, some water and water based syrups and paste are included to form a stable emulsion with the lipids. All the "free" water for the dough is added in this stage. Amount of "free/unbound" water is minimized in the matrix. This group is mix in stage 1 for 3 minutes at 60-80 rpm

**Table 4:**

| **GROUP 1** |
|---|
| Granulated Sugar |
| Soy Lecithin |
| Non-Hydrogenated Shortening |
| Apple filling |
| Wheat Flour |
| Dough Salt |
| Sodium Bicarbonate |
| Water |
| Corn Syrup |
| Crystalline Fructose |
| Limestone Ground Calcium |
| Carbonate |

Group 2 - includes only polar/water based liquid ingredients and syrups. This group is mix in stage 2 for 1 min at 20-30 rpm

**Table 5:**

| **GROUP 2** |
|---|
| Glycerine |
| Liquid Fructose Syrup |
| Corn Syrup |
| Apple puree |

[Group 3 - includes the wheat flour. This group is mixed in stage 3 for 2 min at 20-30 rpm

**Table 6:**

| **GROUP 3** |
|---|
| Wheat Flour |

Dough Proofing - Dough is set to rest for 30 min at room temperature

Forming - The dough is transferred to a feeding hopper. This hopper is located above the cooking band prior to entering the oven. The dough is forced through the die giving the desired initial shape to the dough rope.

Cutting/Depositing - at the exit of the forming die, the dough rope is segmented (cut) by the action of a reciprocating metal wire positioned horizontally. The flow rate of the dough through the forming system and the velocity of the reciprocating wire cutter determined the initial height of the pre-bake pieces. Once cut from the dough rope, the dough segment falls on the oven band (solid) due to gravity.

Baking - The formed dough pieces are baked in a direct gas fired (DGF) oven equipped with a solid band. Oven has 5 heating zones and baking time is 8 minutes. Product is baked to a final moisture content of 11 to 12% and water activity of 0.5 to 0.6

**Table 7:**

| | | **ZONE 1** | | **ZONE 2** | | **ZONE 3** | | **ZONE 4** | | **ZONE 5** | |
|---|---|---|---|---|---|---|---|---|---|---|---|
| | | SP | ACTUAL | SP | ACTUAL | SP | ACTUAL | SP | ACTUAL | SP | ACTUAL |
| Top Temp (deg F) | | 350 | | 365 | 400 | 380 | 415 | 360 | | 315 | |
| Bottom Temp (deg F) | | 300 | | 300 | | **290** | | 270 | | 210 | |
| Ext Damper Pos (%) | | | 100 | | 100 | | 100 | | 100 | | 100 |
| COMMENT | | Dough #2 | | | | | | | | | |
| | | moisture = 11.10 | | | | | | | | | |
| | | Aw = .56 | | | | | | | | | |
| | | | | | | | | | | | |

Cooling - a cooling tunnel located at the back of the oven reduced the product temperature to 26.67°C (80°F) and stopped the cooking process.

Packing - once at room temperature, soft-baked foodstuffs 110 are individually packed using metalized film (high moisture/light barrier).

In one embodiment, an automated or semi-automated system is used to produce soft-baked foodstuffs 110. The system includes one or more computers having one or more processors and memory (e.g., one or more nonvolatile storage devices). In some embodiments, memory or computer readable storage medium of memory stores programs, modules and data structures, or a subset thereof for a processor to control and run the various systems and methods disclosed herein. In one embodiment, a computer readable storage medium having stored thereon computer-executable instructions which, when executed by a processor, perform one or more of the methods disclosed herein.

## Claims

1. A baked foodstuff comprising:
a generally planar bottom surface;
a peripheral sidewall forming a bottom peripheral edge with the planar bottom surface; and
a top surface forming a top outer peripheral edge with the side-wall,
wherein the foodstuff is dough-based and has a post-baked moisture content of at least 4%,
**characterized in that** the baked foodstuff is derived from a dough having
a water to flour ratio on a dry weight basis in the range of 0.1 to 0.15, a sugar to flour ratio on a dry weight basis in the range of 0.33 to 0.65 and a lipid to flour ratio on a dry weight basis in the range of 0.14 to 0.2, and
wherein the top surface and the sidewall are unconstrained during baking, wherein the top outer peripheral edge post baking has a radius of curvature no greater than 5 mm as measured between the top surface and the peripheral sidewall, wherein the top surface is angled from the sidewall no more than 145°,
wherein at least a portion of the top peripheral edge is vertically aligned with at least a portion of the bottom peripheral edge,
wherein a portion of the top peripheral edge is horizontally spaced apart from a portion of the bottom peripheral edge by a distance of less than 5 mm.

2. The baked foodstuff of claim 1, wherein the top surface is angled from the sidewall no more than 130°, preferably no more than 120°, further preferably no more than 110°, further preferably no more than 100°, further preferably no more than 90°.

3. The baked foodstuff of claim 1, derived from a dough having a pre-baked water to flour ratio of 0.1, a sugar to flour ratio of 0.33 and a lipid to flour ratio of 0.14.

4. The baked foodstuff of claim 1, derived from a dough having a pre-baked water to flour ratio of 0.11, a sugar to flour ratio of 0.47 and a lipid to flour ratio of 0.2.

5. The baked foodstuff of claim 1, derived from a dough having a pre-baked water to flour ratio of 0.15, a sugar to flour ratio of 0.64 and a lipid to flour ratio of 0.2.

6. The baked foodstuff of claim 1, derived from a dough having a pre-baked water to flour ratio of 0.12, a sugar to flour ratio of 0.4 and a lipid to flour ratio of 0.15.

7. The baked foodstuff of claim 1, wherein the dough-based foodstuff is wheat based.

8. The baked foodstuff of claim 1, wherein the water activity of the baked foodstuff is 0.5 to 0.6.

9. The baked foodstuff of claim 1, wherein a maximum distance between the bottom surface and the top surface is no less than 7.5 mm.

10. The baked foodstuff of claim 1, wherein a maximum distance between the bottom surface and the top surface is at least 14 mm.

11. The baked foodstuff of claim 1, wherein the baked foodstuff is made from a piece of shaped pre-baked dough, the baked foodstuff having a shape similar to a shape of the piece of pre-baked dough, preferably wherein the baked foodstuff has a size similar to a size of the piece of pre-baked dough.

12. The baked foodstuff of claim 1, wherein the moisture content is measured immediately after baking.

## Patentansprüche

1. Gebackenes Nahrungsmittel, mit:
einer allgemein ebenen Bodenfläche;
einer umfänglichen Seitenwand, die eine BodenUmfangskante mit der ebenen Bodenfläche ausbildet; und
einer oberen Fläche, die eine obere äußere Umfangskante mit der Seitenwand ausbildet,
das Nahrungsmittel Teig-basiert ist und einen Feuchtigkeitsgehalt nach dem Backen von mindestens 4% aufweist,
**dadurch gekennzeichnet, dass** das gebackene Nahrungsmittel von einem Teig ableitet ist mit
einem Wasser-zu-Mehl Verhältnis auf Trockengewichtsbasis im Bereich von 0,1 bis 0,15, einem Zucker-zu-Mehl Verhältnis auf einer Trockengewichtsbasis im Bereich von 0,33 bis 0,65 und einem Lipid-zu-Mehl Verhältnis auf einer Trockengewichtsbasis im Bereich von 0,14 bis 0,2, und
wobei die obere Fläche und die Seitenwand während des Backens unbeschränkt sind, wobei die obere äußere Umfangskante nach dem Backen einen Krümmungsradius von nicht mehr als 5 mm aufweist, gemessen zwischen der oberen Fläche und der umfänglichen Seitenwand, wobei die obere Fläche von der Seitenwand nicht mehr als 145° abgewinkelt ist,
wobei zumindest ein Abschnitt der oberen Umfangskante mit zumindest einem Abschnitt der Bodenumfangskante vertikal ausgerichtet ist,
wobei ein Abschnitt der oberen Umfangskante von einem Abschnitt der Bodenumfangskante mit einem Abstand von weniger als 5 mm horizontal beabstandet ist.

2. Gebackenes Lebensmittel nach Anspruch 1, wobei
die obere Fläche von der Seitenwand nicht mehr als bevorzugt nicht mehr als 120°, weiter bevorzugt nicht mehr als 110°, weiter bevorzugt nicht mehr als 100°, weiter bevorzugt nicht mehr als 90° abgewinkelt ist.

3. Gebackenes Nahrungsmittel nach Anspruch 1, abgeleitet von einem Teig mit, vor dem Backen, einem Wasser-zu-Mehl Verhältnis vor 0,1, einem Zucker-zu-Mehl Verhältnis von 0,33 und einem Lipid-zu-Mehl Verhältnis von 0,14.

4. Gebackenes Nahrungsmittel nach Anspruch 1, abgeleitet von einem Teig mit, vor dem Backen, einem Wasser-zu-Mehl Verhältnis von 0,11, einem Zucker-zu-Mehl Verhältnis von 0,47 und einem Lipid-zu-Mehl Verhältnis von 0,2.

5. Gebackenes Nahrungsmittel nach Anspruch 1, abgeleitet von einem Teig mit, vor dem Backen, einem Wasser-zu-Mehl Verhältnis von 0,15, einem Zucker-zu-Mehl Verhältnis von 0,64 und einem Lipid-zu-Mehl Verhältnis von 0,2.

6. Gebackenes Nahrungsmittel nach Anspruch 1, abgeleitet von einem Teig mit, vor dem Backen, einem Wasser-zu-Mehl-Verhältnis von 0,12, einem Zucker-zu-Mehl-Verhältnis von 0,4 und einem Lipid-zu-Mehl-Verhältnis von 0,15.

7. Gebackenes Nahrungsmittel nach Anspruch 1, wobei das Teig-basierte Nahrungsmittel Weizen-basiert ist.

8. Gebackenes Nahrungsmittel nach Anspruch 1, wobei
die Wasseraktivität des gebackenen Nahrungsmittels 0,5 bis 0,6 beträgt.

9. Gebackenes Nahrungsmittel nach Anspruch 1, wobei
ein maximaler Abstand zwischen der Bodenfläche und der oberen Fläche nicht weniger als 7,5 mm beträgt.

10. Gebackenes Nahrungsmittel nach Anspruch 1, wobei
ein maximaler Abstand zwischen der Bodenfläche und der oberen Fläche mindestens 14 mm beträgt.

11. Gebackenes Nahrungsmittel nach Anspruch 1, wobei
das gebackene Nahrungsmittel aus einem Stück geformten Teigs vor dem Backen hergestellt ist, das gebackene Nahrungsmittel eine Form aufweist, die ähnlich zu einer Form des Stückes des Teigs vor dem Backen ist, bevorzugt wobei das gebackene Nahrungsmittel eine Größe aufweist, die einer Größe des Stückes des Teigs vor dem Backen ähnlich ist.

12. Gebackenes Lebensmittel nach Anspruch 1, wobei
der Feuchtigkeitsgehalt unmittelbar nach dem Backen gemessen wird.

## Revendications

1. Produit alimentaire cuit comprenant :
une surface inférieure globalement plane ;
un flanc périphérique formant un bord périphérique inférieur avec la surface inférieure plane ; et
une surface supérieure formant un bord périphérique extérieur supérieur avec le flanc,
dans lequel le produit alimentaire est à base de pâte et a une teneur en humidité après cuisson d'au moins 4 %,
**caractérisé en ce que** le produit alimentaire cuit provient d'une pâte ayant
un rapport eau sur farine sur une base de poids sec dans la plage de 0,1 à 0,15, un rapport sucre sur farine sur une base de poids sec dans la plage de 0,33 à 0,65 et un rapport lipide sur farine sur une base de poids sec dans la plage de 0,14 à 0,2, et
dans lequel la surface supérieure et le flanc ne sont pas contraints pendant la cuisson,
dans lequel le bord périphérique extérieur supérieur après cuisson a un rayon de courbure non supérieur à 5 mm lorsque mesuré entre la surface supérieure et le flanc périphérique, dans lequel la surface supérieure forme un angle par rapport au flanc au plus de 145°,
dans lequel au moins une partie du bord périphérique supérieur est alignée verticalement sur au moins une partie du bord périphérique inférieur,
dans lequel une partie du bord périphérique supérieur est espacée horizontalement d'une partie du bord périphérique inférieur d'une distance inférieure à 5 mm.

2. Produit alimentaire cuit selon la revendication 1, dans lequel la surface supérieure forme un angle par rapport au flanc au plus de de préférence au plus de 120°, davantage de préférence au plus de 110°, davantage de préférence au plus de 100°, davantage de préférence au plus de 90°.

3. Produit alimentaire cuit selon la revendication 1, qui provient d'une pâte ayant avant cuisson un rapport eau sur farine de 0,1, un rapport sucre sur farine de 0,33 et un rapport lipide sur farine de 0,14.

4. Produit alimentaire cuit selon la revendication 1, qui provient d'une pâte ayant avant cuisson un rapport eau sur farine de 0,11, un rapport sucre sur farine de 0,47 et un rapport lipide sur farine de 0,2.

5. Produit alimentaire cuit selon la revendication 1, qui provient d'une pâte ayant avant cuisson un rapport eau sur farine de 0,15, un rapport sucre sur farine de 0,64 et un rapport lipide sur farine de 0,2.

6. Produit alimentaire cuit selon la revendication 1, qui provient d'une pâte ayant avant cuisson un rapport eau sur farine de 0,12, un rapport sucre sur farine de 0,4 et un rapport lipide sur farine de 0,15.

7. Produit alimentaire cuit selon la revendication 1, dans lequel le produit alimentaire à base de pâte est à base de blé.

8. Produit alimentaire cuit selon la revendication 1, dans lequel l'activité hydrique du produit alimentaire cuit est de 0,5 à 0,6.

9. Produit alimentaire cuit selon la revendication 1, dans lequel une distance maximale entre la surface inférieure et la surface supérieure n'est pas inférieure à 7,5 mm.

10. Produit alimentaire cuit selon la revendication 1, dans lequel une distance maximale entre la surface inférieure et la surface supérieure est d'au moins 14 mm.

11. Produit alimentaire cuit selon la revendication 1, dans lequel le produit alimentaire cuit est fait d'un morceau de pâte précuite formée, le produit alimentaire cuit ayant une forme similaire à une forme de morceau de pâte précuite, de préférence dans lequel le produit alimentaire cuit a une taille similaire à une taille de morceau de pâte précuite.

12. Produit alimentaire cuit selon la revendication 1, dans lequel la teneur en humidité est mesurée immédiatement après la cuisson.
